# EUROPEAN PATENT SPECIFICATION

(11) **EP 4 390 161 B1**
(45) Date of publication and mention of the grant of the patent: **29.04.2026**
(21) Application number: 22858110.4
(22) Date of filing: 12.04.2022
(51) Int. Cl.: F16C 19/06, F16C 33/32, F16C 33/58, F16C 33/66, F16C 19/52, F16C 33/64

(54) **ROLLING BEARING**
WÄLZLAGER
PALIER À ROULEMENT

(30) Priority: 20.08.2021 JP 2021135064
(43) Date of publication of application: 26.06.2024
(73) Proprietor: NSK Ltd., Tokyo 141-8560 (JP)
(72) Inventor: KAWANO Tomoki, Fujisawa-shi, Kanagawa 251-8501 (JP); TODA Yujiro, Fujisawa-shi, Kanagawa 251-8501 (JP); SHIMIZU Yasuyuki, Fujisawa-shi, Kanagawa 251-8501 (JP); UEDA Koji, Fujisawa-shi, Kanagawa 251-8501 (JP)
(74) Representative: Grünecker Patent- und Rechtsanwälte PartG mbB
(86) International application number: PCT/JP2022/017648
(87) International publication number: WO 2023/021786

(56) References cited:
- JP-A- 2002 339 976
- JP-A- 2002 339 976
- JP-A- 2007 056 912
- JP-A- 2007 056 912
- JP-A- 2016 094 990
- JP-A- 2016 094 990

## Description

### TECHNICAL FIELD

The present invention relates to a rolling bearing for a fan motor of an air conditioner, and more particularly to a rolling bearing that can reduce damage caused by electrolytic corrosion and has excellent acoustic characteristics.

### BACKGROUND ART

In the related arts, rolling bearings used in machine tools and the like include, for example, an inner ring with an inner ring side track surface on the outer surface thereof, an outer ring with an outer ring side track surface at a position facing the inner ring side track surface, and a large number of rolling elements that are filled in rolling paths formed by the inner ring side track surface and the outer ring side ring side track surface and are capable of rolling on the rolling paths. The outer ring and the inner ring rotate relative to each other while receiving load.

In such rolling bearings, as the rolling elements roll on the rolling path, the rolling elements receive a load between the pair of track surfaces (inner ring/outer ring) and the rolling elements, and the outer ring and the inner ring rotate stably. Therefore, special steel with excellent durability is used as a material for the outer ring and the inner ring which have track surfaces or the rolling elements.

By the way, the special steel that forms the outer ring and the inner ring or the rolling elements is a conductor. On the other hand, since a lubricant (grease, lubricating oil) supplied between the rolling elements and the track surface is an insulator, a potential difference is generated between the inner ring and the outer ring due to static electricity, switching of an inverter, and the like.

When the potential difference exceeds a dielectric breakdown voltage and an electric discharge occurs between the inner ring, the outer ring, and the rolling elements, the track surfaces and the surfaces of the rolling elements locally reach a high temperature of several thousand °C, causing the surfaces to melt, which may cause damage (electrolytic corrosion).

When electric discharges occur several times, there is a problem that damage (electrolytic corrosion) to the track surfaces and the surfaces of the rolling elements becomes severe, and the sound (vibration) of the bearing increases.

There are two methods for preventing such electrolytic corrosion: a method of energizing the inside of the bearing, and a method of insulating the bearing.

For example, as a method for energizing the inside of a bearing, Patent Literature 1 proposes a method in which conductive grease to which a carbon-based conductive substance such as carbon black is added is sealed between track surfaces of a rolling bearing.

As methods for insulating the bearing, a method of spraying a ceramic coating on the outer ring outer diameter surface as disclosed in Patent Literature 2, a method of using ceramic rolling elements (balls) as disclosed in Patent Literature 3, and the like have been proposed.

Patent Literature 4 describes a method for reducing changes in a structure of the surface of a bearing member due to static electricity in a rolling bearing that supports a crankshaft of a scroll compressor. For example,

Patent Literature 4 describes that at least one of the inner ring, the outer ring, and the rolling elements is made of a material that forms a passive film, such as martensitic stainless steel.

JP2002-339976 A discloses a rolling bearing according to the preamble of claim 1.

### CITATION LIST

### PATENT LITERATURE

Patent Literature 1: JP2009-197114A
Patent Literature 2: JP2008-69923A
Patent Literature 3: JP2009-97658A
Patent Literature 4: JP2001-304150A

### SUMMARY OF INVENTION

### TECHNICAL PROBLEM

However, in the method described in Patent Literature 1, carbon black may be removed from the contact surface between the bearing ring and the rolling elements during bearing rotation, or the carbon black chain structure may be destroyed due to shearing.

Therefore, the conductivity of the grease decreases over time, and it may be difficult to maintain the effect of preventing electrolytic corrosion over a long period of time.

Although the methods described in Patent Literatures 2 and 3 are effective in preventing the occurrence of electrolytic corrosion, compared to bearings in which the bearing ring and rolling elements are made of bearing steel, there is a problem that the manufacturing cost becomes considerably high.

In recent years, there has been an increasing demand for noise reduction during operation of motors such as air conditioner motors and blower motors, and the rolling bearings used in such motors are also required to be quiet, that is, to have excellent acoustic properties.

However, it is often difficult for all of the rolling bearings described in Patent Literatures 1 to 4 to fully satisfy the required acoustic characteristics.

The present invention has been made in view of the above-mentioned problems, and an object thereof is to provide a rolling bearing that can prevent an increase in bearing vibration due to electrolytic corrosion at low cost and has excellent acoustic characteristics.

### SOLUTION TO PROBLEM

The above object of the present invention is achieved by the rolling bearing according to claim 1 and preferred embodiments according to claims 2-4.

### ADVANTAGEOUS EFFECTS OF INVENTION

According to the present invention, it is possible to prevent an increase in bearing vibration due to electrolytic corrosion at low cost, and to provide a rolling bearing having excellent acoustic characteristics.

### BRIEF DESCRIPTION OF DRAWINGS

Fig. 1 is a cross-sectional view schematically showing a part of a rolling bearing according to an embodiment of the present invention.
Fig. 2 is a graph showing a state of bearing vibration in a rolling device of a first example in comparison with a comparative example, where the vertical axis is vibration acceleration and the horizontal axis is test time.

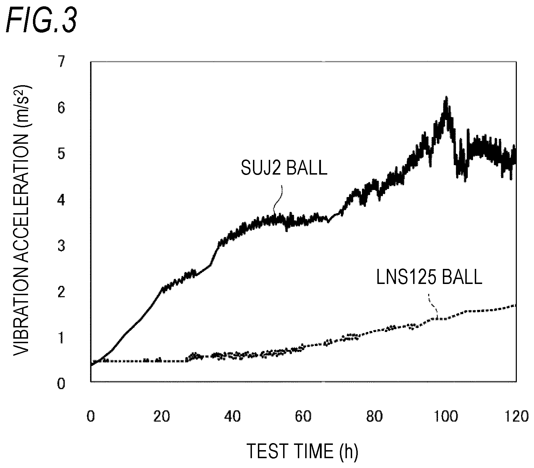

Fig. 3 is a graph showing a state of bearing vibration in a rolling device of a second example in comparison with a comparative example, where the vertical axis is vibration acceleration and the horizontal axis is test time.

### DESCRIPTION OF EMBODIMENTS

One embodiment of a rolling bearing according to the present invention will be described in detail below with reference to the drawings. Note that the present embodiment is only one embodiment of the present invention, and should not be construed as limiting in any manner, and design changes can be made as appropriate within the scope of the present invention. Hereinafter, a first embodiment will be described.

### [First Embodiment]

### [Rolling Bearing]

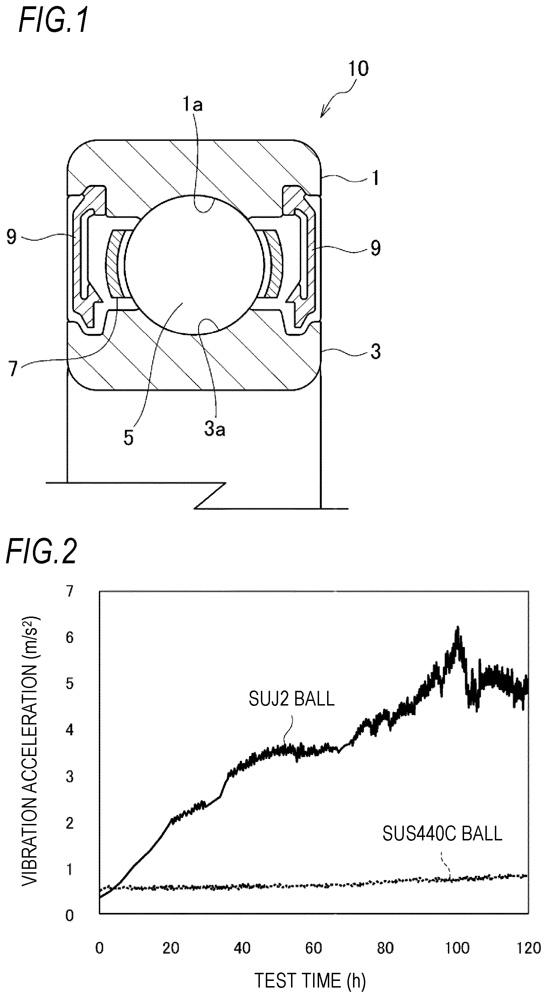

Fig. 1 is a cross-sectional view schematically showing a part of a rolling bearing according to an embodiment of the present invention.

As shown in Fig. 1, a rolling bearing 10 according to the present embodiment includes an outer ring (first member) 1 having an outer ring track surface (first track surface) 1a on the inner peripheral surface thereof, and an inner ring (second member) having an inner ring track surface (second track surface) 3a facing the outer ring track surface 1a.

A plurality of rolling elements (balls) 5 are rotatably incorporated in between the outer ring track surface 1a and the inner ring track surface 3a, and to hold the rolling elements, synthetic resin retainers 7 are arranged at approximately equal intervals in the peripheral direction between the plurality of rolling elements 5.

The internal space of the rolling bearing 10 is supplied with a lubricant (not shown) that maintains good lubricity between the rolling elements 5, the outer ring track surface 1a, and the inner ring track surface 3a, and seals (sealing members) 9 are incorporated on both end surfaces in the shaft direction of the rolling bearing 10 to seal the bearing internal space.

That is, the present embodiment relates to improvement of the rolling elements in a rolling device including a first member, a second member, and a plurality of rolling elements that are rotatably incorporated between the first member and the second member. A deep groove ball bearing can be exemplified as an embodiment of the rolling device according to the present embodiment.

Hereinafter, the materials of the rolling elements 5, the outer ring 1, and the inner ring 3, and the lubricant (grease) of the rolling bearing 10 according to the present embodiment will be described in more detail.

### <Materials and Grease of Rolling Elements 5, Outer Ring 1, and Inner Ring 3>

The rolling elements 5 are made of stainless steel, such as martensitic stainless steel, which has the highest hardness among stainless steels. As the grease, Li soap grease, urea grease, fluorine grease, and the like used in rolling bearings can be suitably used, and conductive grease containing a conductive substance such as carbon black in the grease can also be used. The outer ring 1 and the inner ring 3 are made of SUJ2 (high carbon bearing steel) or the like.

In the present embodiment, a deep groove ball bearing has been described as an embodiment of the rolling device of the present invention, but the rolling device is a rolling device including a first member, a second member, and a plurality of rolling elements which are rotatably incorporated between the first member and the second member, and the present invention is not limited to the present embodiment as long as the rolling elements are made of stainless steel.

That is, other types of rolling bearings such as roller bearings, or linear motion devices such as ball screws and linear guides may be used.

For example, the rolling bearing may be a thrust cylindrical roller bearing or the like including an annular first bearing ring (first member) and a second bearing ring (second member) that are arranged to face each other to be relatively rotatable, an annular retainer disposed between the first bearing ring and the second bearing ring and having a plurality of pockets formed at intervals in the peripheral direction, and cylindrical rollers (rolling elements) accommodated in the pockets of the retainer.

The rolling bearing may be a ball screw device (linear motion device) or the like including a nut (first member) with a spiral groove formed on the inner peripheral surface thereof, a screw shaft (second member) with a spiral groove formed on the outer peripheral surface thereof, and a plurality of balls (rolling elements) arranged to be able to roll between a rolling path configured with a spiral groove on the nut and a spiral groove on the screw shaft.

The rolling bearing may be a linear guide device (linear motion device) and the like including a guide rail (first member) and a slider (second member) installed to be able to slide over the guide rail via a plurality of rolling elements.

As described above, the following matters are disclosed regarding the first embodiment.
(1) A rolling device including: a first member, a second member, and a plurality of rolling elements that are rotatably incorporated between the first member and the second member, in which
   the rolling elements are made of stainless steel.
(2) The rolling device according to (1), in which the rolling element is made of martensitic stainless steel.
(3) The rolling device according to (1) or (2), in which the first member is an outer ring, the second member is an inner ring, and the rolling element is a ball, and
   the rolling device is a rolling bearing that includes a retainer that rotatably holds the balls, a sealing member that seals between the outer ring and the inner ring, and grease disposed in the bearing internal space sealed by the sealing member.

According to the rolling device in the first embodiment, since stainless steel is used for the rolling elements, an increase in bearing vibration due to electrolytic corrosion can be prevented at low cost.

### [Second Embodiment]

Next, a second embodiment will be described. In the second embodiment, the configuration of the rolling bearing is the same as in the first embodiment. Therefore, with reference to Fig. 1, the materials of the rolling elements 5, the outer ring 1, and the inner ring 3, the surface roughness and hardness of the rolling elements 5, the outer ring track surface 1a, and the inner ring track surface 3a, and a lubricant of the rolling bearing 10 according to the second embodiment will be described in more detail.

### <Materials of Rolling Elements 5, Outer Ring 1, and Inner Ring 3>

In the present embodiment, the rolling elements 5 are made of stainless steel, and for example, SUS420J2 steel material, which is 13Cr stainless steel, can be used.

Since the rolling elements 5 are made of stainless steel, a passive film is formed on the surface of the rolling elements 5. In the present embodiment, since the surface roughness of the rolling elements 5 is controlled to be below a predetermined value, the passive film on the surface of the rolling elements 5 is uniform and good with few defects. Due to the presence of such a passive film, damage to the track surfaces 1a and 3a and the surfaces of the rolling elements 5 can be reduced, and as a result, the acoustic characteristics of the rolling bearing can be maintained.

In the present embodiment, the rolling elements 5 and the track surfaces 1a and 3a may be made of the same steel type, but are preferably made of different steel types. The different steel types may have different surface compositions (surface states). The rolling elements 5 and the track surfaces 1a and 3a having mutually different surface compositions can be implemented by using different heat treatment conditions and passivation treatment conditions even when the same materials are used. By making the surface compositions of the rolling elements 5 and the outer ring 1 and the inner ring 3 different, even when the rolling elements 5 and the track surfaces 1a and 3a come into metal contact with each other, adhesion of the other material to each surface can be prevented, and the surface roughness can be excellently maintained.

Specifically, as the outer ring 1 and the inner ring 3, SUJ2 steel material, SUS420J2 steel material which is 13Cr stainless steel material, and the like can be used. However, it is preferable to use ordinary bearing steel material (SUJ2 steel). When SUJ2 steel material is used for the outer ring 1 and the inner ring 3, it is relatively easy to process the respective track surfaces 1a and 3a to desired surface roughness.

### <Surface Roughness Ra of Rolling Element 5: 0.01 µm or less>

### <Surface Roughness Ra of Outer Ring Track Surface 1a and Inner Ring Track Surface 3a: 0.03 µm or less>

Electrolytic corrosion occurs due to electrical discharge or energization between the rolling elements 5 and the outer ring 1 and inner ring 3. Energization occurs when there is metal contact, and as described above, according to the rolling bearing according to the present embodiment, the passive film on the surface of the rolling elements 5 has insulating properties, and thus even when there is metal contact, it is considered that energization can be prevented to some extent.

The inventors of the present application have found that, when the surface roughness Ra of the rolling elements 5 is 0.01 µm or less, a good passive film is formed on the surface of the rolling elements 5, which is uniform and has few defects, and accordingly, the occurrence of electrolytic corrosion can be prevented. The mechanism by which surface roughness Ra prevents the occurrence of electrolytic corrosion is not clear, but due to the presence of a good passive film with few defects, the space between the rolling elements 5 and the track surfaces 1a and 3a becomes like a capacitor, and thus, it is considered to be due to the fact that even when energization occurs, electricity flows slowly between the rolling elements 5 and the track surfaces 1a and 3a.

When the surface roughness Ra of the rolling element 5 is larger than 0.01 µm, the surface unevenness may increase and defects may occur in the insulating passive film, and it is considered that strong electricity locally flows between the rolling elements 5 and the track surfaces 1a and 3a at the position of such defects, causing electrolytic corrosion. As the electrolytic corrosion progresses as such, bearing vibration increases and acoustic characteristics deteriorate.

On the other hand, in the present embodiment, since the rolling elements 5 having a surface roughness Ra of 0.01 µm or less and a smaller curvature are softer and more easily deformed than the track surfaces 1a and 3a, it is considered that large currents can be prevented from flowing locally in a concentrated manner. As a result, an increase in bearing vibration due to electrolytic corrosion can be prevented, and excellent acoustic characteristics can be obtained.

Therefore, the surface roughness Ra of the rolling element 5 is 0.01 µm or less, preferably 0.008 µm or less, and more preferably 0.006 µm or less. Accordingly, it is possible to improve acoustic performance, which cannot be achieved only by using stainless steel rolling elements.

When the stainless steel rolling elements are steel balls, the shape and surface roughness of the steel balls in the rolling bearing are specified in various grades in JIS B 1501:2009. In the present embodiment, the grade of the steel ball is preferably higher than G3.

For the same reason as above, by controlling the surface roughness Ra of the outer ring track surface 1a and the inner ring track surface 3a, it is possible to prevent the occurrence of electrolytic corrosion and obtain even better acoustic characteristics.

Specifically, the surface roughness Ra of the track surfaces 1a and 3a is preferably 0.03 µm or less, more preferably 0.015 µm or less.

Note that the rolling elements are not limited to spheres, and may be rollers. Therefore, even in the case of rollers, it is preferable to control the surface roughness Ra within the above range.

### <Hardness of Track Surfaces 1a and 3a: 58 HRC or more and 64 HRC or less>

### <Surface Hardness of Rolling Element 5: 56 HRC or more and 63 HRC or less>

As described above, it is preferable that the rolling elements 5 and the track surfaces 1a and 3a have different surface compositions, but the hardness of the track surfaces 1a and 3a may be softer than, may be the same as, or may be harder than the hardness of the surface of the rolling element 5.

Note that when the absolute value of the difference in Rockwell hardness between the rolling elements 5 and the track surfaces 1a and 3a is 4 HRC or less, mutual abrasion can be prevented. Therefore, the absolute value of the difference in Rockwell hardness between the rolling elements 5 and the track surfaces 1a and 3a is preferably 4 HRC or less.

Although the minimum absolute value of the difference in Rockwell hardness between the rolling elements 5 and the track surfaces 1a and 3a is not particularly limited, to obtain a sufficient effect by providing a hardness difference, the absolute value of the difference in Rockwell hardness is preferably 1 HRC or more, more preferably 2 HRC or more.

However, it is more preferable that the hardness of the surface of the rolling element 5 is softer than the hardness of the track surfaces 1a and 3a. By making the hardness of the surface of the rolling element 5 softer than the track surfaces 1a and 3a, when the rolling element 5 and the track surfaces 1a and 3a form a so-called contact ellipse, the rolling element 5 side, that is, the side with a higher surface curvature is more deformed (follows the shape of the other side). Therefore, when the rolling elements 5 and the track surfaces 1a and 3a come into metal contact, the contact can be made with less damage.

For example, since the hardness of the outer ring 1 and the inner ring 3 made of SUJ2 steel material is usually 61 HRC or more and 64 HRC or less, the hardness of the stainless steel rolling elements 5 is preferably 56 HRC or more and 63 HRC or less. As described above, for example, it is also suitable to provide a difference in surface hardness by the rolling elements being made of SUS440C steel material that is 18Cr stainless steel, and the outer ring 1 and inner ring 3 being made of SUS420J2 steel material that is 13Cr stainless steel.

### <Lubricant>

In the present embodiment, the lubricant (lubricating grease) supplied between the outer ring track surface 1a and the inner ring track surface 3a and the rolling elements 5 is not particularly limited.

For example, as the lubricant, Li soap grease, urea grease, fluorine grease, and the like used in rolling bearings can be suitably used, and conductive grease containing a conductive substance such as carbon black in the grease can also be used.

In rolling bearings of the related arts, it was necessary to increase the oil film thickness of the lubricant to prevent electrolytic corrosion, but in the present embodiment, the occurrence of electrolytic corrosion is prevented, and thus the oil film thickness can be set thinner than in the related arts. As such, by reducing the oil film thickness, that is, by lowering the viscosity of the lubricant, it is possible to achieve low torque, and as a result, power consumption can be reduced.

Specifically, from the viewpoint of reducing torque and power consumption, the kinematic viscosity of the lubricant at 40°C is preferably 50 mm²/s or less. The rolling bearing in the present embodiment can prevent the occurrence of electrical corrosion even when such a low kinematic viscosity lubricant is used. The kinematic viscosity of the lubricant at 40°C is more preferably 30 mm²/s or less, and even more preferably 20 mm²/s or less.

Note that, for example, both the rolling elements having a Cr content of 16.0 to 18.0% by mass and the rolling elements in the second embodiment having a Cr content of 10.0 to 15.0% by mass can prevent an increase in bearing vibration due to electrolytic corrosion, and it is possible to obtain excellent acoustic characteristics, compared to rolling elements of the related arts. In particular, when electrolytic corrosion is assumed to occur but does not actually occur, or when conditions are such that electrolytic corrosion is unlikely to occur, the rolling elements of the second embodiment can provide superior acoustic performance.

As described above, the rolling bearing according to the present embodiment can reduce damage caused by electrolytic corrosion or the like caused by leakage current that is likely to occur in inverter control, and is suitably useful for air conditioner motors, blower motors, and the like that require excellent acoustic performance.

### Example

Hereinafter, the first embodiment and the second embodiment of the present invention will be described in detail with reference to invention examples and comparative examples, but the present invention is not limited thereto. Note that the first example shown below is an example that shows the effects of the first embodiment, and the second example is an example that shows the effects of the second embodiment.

### <First Example>

To confirm the effectiveness of the rolling bearing of the present embodiment in preventing the increase in bearing vibration due to electrolytic corrosion, a test was conducted to investigate changes in bearing vibration over time while the bearing was energized.

As the rolling elements (balls) used in the test, stainless steel (SUS440C) balls with a size of 5/32 were prepared in the present embodiment, and SUJ2 (high carbon bearing steel) balls with a size of 5/32 were prepared in the comparative example. The SUS440C ball contains 16.0 to 18.0% by mass of Cr, and the SUJ2 ball contains 1.3 to 1.6% by mass of Cr.

Each rolling element was then incorporated into a rolling bearing (deep groove ball bearing) including inner and outer rings of a SUJ2 single row deep groove ball bearing (inner diameter ϕ 8 mm, outer diameter ϕ 22 mm, width 7 mm) and a plastic retainer.

As the grease sealed inside the bearing, an ester oil of which base oil has a viscosity of 24 cSt at 40°C, and a grease of which a thickener is Li soap were used.

### (Test Condition)

Axial load: 50 N
Bearing rotation speed: 2000 min⁻¹
Test time: 120 hours

A resistor was inserted in series with the bearing, and a DC voltage of 30 V was applied such that the maximum current flowing through the bearing was 30 mA.

Bearing vibration was measured using an acceleration pickup.

### (Test Results)

The results are shown in Fig. 2. As shown in Fig. 2, in the rolling bearing of the comparative example using SUJ2 (high carbon bearing steel) balls, the bearing vibration increases during the test, but no increase in bearing vibration is observed from the rolling bearing of the present embodiment using SUS440C (stainless steel) balls.

### <Second Example>

### [Bearing Vibration Test]

To confirm the effect of preventing electrolytic corrosion in the rolling bearing according to the present invention, a bearing vibration test was conducted to measure changes in bearing vibration over time while energizing the rolling elements (balls) made of 13Cr stainless steel (LNS125) and the bearing (outer ring and inner ring).

### (Preparation of Rolling Bearing)

A rolling bearing was prepared as follows.

First, as test balls, balls made of LNS125 steel material (LNS125 ball), which is a 13Cr stainless steel with a size of 5/32, and balls made of SUJ2 steel material (SUJ2 ball) were prepared. Note that LNS125 steel material is a 13Cr stainless steel containing 10.0 to 15.0% by mass of Cr, and balls made of SUJ2 steel contain 1.3 to 1.6% by mass of Cr.

Next, the outer ring and the inner ring of a single row deep groove ball bearing (inner diameter: 8 mm, outer diameter: 22 mm, width: 7 mm) was prepared, a plastic retainer was also prepared, and the ball and the retainer are incorporated between the outer ring track surface and the inner ring track surface. The outer ring and inner ring were made of SUJ2 steel material.

A lubricant was supplied to the inside of the bearing. As the lubricant, a grease was used in which an ester oil having a kinematic viscosity at 40°C of 24 mm²/s is used as a base oil and Li soap is used as a thickener.

The steel type, surface roughness, and Rockwell hardness of the rolling elements and the track surfaces of the outer ring and the inner ring are shown in Table 1 below.

**Table 1**

| | Steel type | Surface roughness Ra (µm) | Rockwell hardness (HRC) |
|---|---|---|---|
| Rolling element (ball) | LNS125 | 0.001 | 63 |
| | SUJ2 | 0.0008 | 65 |
| Outer ring and inner ring | SUJ2 | 0.004 | 60 |

### (Bearing Vibration Test)

A bearing vibration test was conducted using the manufactured rolling bearing.

First, the bearing and the external resistor were connected in series, and a DC voltage of 30 V was applied such that the maximum current flowing through the bearing was 30 mA. Thereafter, bearing vibration was measured using an acceleration pickup.

The test conditions were as follows.
Axial load: 50 N
Bearing rotation speed: 2000 min⁻¹
Test time: 120 hours

### (Evaluation Results)

Fig. 2 is a graph showing a state of bearing vibration, where the vertical axis is vibration acceleration and the horizontal axis is test time.

As shown in Fig. 2, in the rolling bearing using SUJ2 balls as rolling elements (comparative example), the vibration acceleration increased significantly as the test time became longer. This is considered to be due to the generation of local strong currents that cause electrolytic corrosion, which damaged the track surfaces and the surfaces of the rolling elements.

On the other hand, in the rolling bearing according to the present invention using LNS 125 balls with a surface roughness Ra of 0.001 µm as rolling elements (invention example), even when the test time is long, the vibration did not increase significantly. In other words, although electrolytic corrosion occurred, a rolling bearing with less damage and excellent acoustic characteristics could be obtained.

### [Comparative Test of Anderon Value]

A plurality of balls used in the above first example (stainless steel balls made of SUS440C) were prepared, a plurality of balls used in the above second example (LNS125 balls made of 13Cr stainless steel) were prepared, and acoustic vibrations (Anderon value) for each type of balls were compared. Specifically, the balls were incorporated into a bearing finished to the same precision, the medium band and high band were measured using a known measuring device, and the average value was calculated with n = 6 to 8.

### [Comparison Results of Anderon Values]

Regarding the rolling element using the balls of the first example, the Anderon value was 1.0 in the medium band and 1.1 in the high band. On the other hand, regarding the rolling element using the balls of the second example, the Anderon value was 0.4 in the medium band and 0.5 in the high band. From the results, rolling elements using balls made of stainless steel containing 10.0 to 15.0% by mass of Cr was able to achieve excellent balance between electrolytic corrosion preventing effect and excellent acoustic properties.

Although various embodiments have been described above with reference to the drawings, it is obvious that the present invention is not limited to such examples. The scope of the invention is defined by the appended claims.

The present application is based on Japanese Patent Application (No. 2020-173046) filed on October 14, 2020, and Japanese Patent Application (No. 2021-135064) filed on August 20, 2021.

### REFERENCE SIGNS LIST

1 Outer ring
1a Outer ring track surface
3 Inner ring
3a Inner ring track surface
5 Rolling element
7 Retainer
10 Rolling bearing

## Claims

1. A rolling bearing (10) comprising:
a first member (1) having a first track surface (1a);
a second member (3) assembled to the first member (1) and having a second track surface (3a) opposite to the first track surface (1a); and
a plurality of rolling elements (5) rotatably incorporated between the first track surface (1a) and the second track surface (3a), wherein
the rolling element (5) is made of stainless steel,
the surface roughness Ra of the rolling element (5) is 0.01 µm or less,
**characterized in that**
the first track surface (1a) and the second track surface (3a) each have a surface roughness Ra of 0.03 µm or less, and
the rolling element (5) and the first track surface (1a) and the second track surface (3a) have mutually different surface compositions.

2. The rolling bearing (10) according to claim 1, wherein
an absolute value of a difference between a hardness of the first track surface (1a) and the second track surface (3a) and the hardness of the surface of the rolling element (5) is 4 HRC or less.

3. The rolling bearing (10) according to claim 2, wherein
the hardness of the first track surface (1a) and the second track surface (3a) is 58 HRC or more and 64 HRC or less, and
the hardness of the surface of the rolling element (5) is 56 HRC or more and 63 HRC or less.

4. The rolling bearing (10) according to claim 3, wherein
a lubricant is supplied between the first track surface (1a) and the second track surface (3a) and the rolling element (5), and
the kinematic viscosity of the lubricant at 40°C is 50 mm²/s or less.

## Patentansprüche

1. Wälzlager (10), das umfasst:
ein erstes Element (1), das eine erste Laufbahnfläche (1a) aufweist;
ein zweites Element (3), das an dem ersten Element (1) angebracht ist und eine zweite Laufbahnfläche (3a) aufweist, die der ersten Laufbahnfläche (1a) gegenüberliegt; sowie
eine Vielzahl von Wälzkörpern (5), die drehbar zwischen der ersten Laufbahnfläche (1a) und der zweiten Laufbahnfläche (3a) angeordnet sind; wobei
der Wälzkörper (5) aus rostfreiem Stahl besteht,
die Oberflächenrauigkeit Ra des Wälzkörpers (5) 0,01 µm oder weniger beträgt,
**dadurch gekennzeichnet, dass**
die erste Laufbahnfläche (1a) sowie die zweite Laufbahnfläche (3a) jeweils eine Oberflächenrauigkeit von 0,03 µm oder weniger haben, und
der Wälzkörper (5) und die erste Laufbahnfläche (1a) sowie die zweite Laufbahnfläche (3a) voneinander verschiedene Oberflächenzusammensetzungen haben.

2. Wälzlager (10) nach Anspruch 1, wobei
ein Absolutwert einer Differenz zwischen einer Härte der ersten Laufbahnfläche (1a) sowie der zweiten Laufbahnfläche (3a) und der Härte der Oberfläche des Wälzkörpers (5) 4 HRC oder weniger beträgt.

3. Wälzlager (10) nach Anspruch 2, wobei
die Härte der ersten Laufbahnfläche (1a) und der zweiten Laufbahnfläche (3a) 58 HRC oder mehr und 64 HRC oder weniger beträgt, und
die Härte der Oberfläche des Wälzkörpers (5) 56 HRC oder mehr und 63 HRC oder weniger beträgt.

4. Wälzlager (10) nach Anspruch 3, wobei
ein Schmiermittel zwischen der ersten Laufbahnfläche (1a) sowie der zweiten Laufbahnfläche (3a) und dem Wälzkörper (5) zugeführt wird, und
die kinematische Viskosität des Schmiermittels bei 40 °C 50 mm²/s oder weniger beträgt.

## Revendications

1. Roulement (10) comprenant :
un premier élément (1) ayant une première surface de piste (1a) ;
un deuxième élément (3) assemblé au premier élément (1) et ayant une deuxième surface de piste (3a) opposée à la première surface de piste (1a) ; et
une pluralité d'éléments roulants (5) incorporés de manière rotative entre la première surface de piste (1a) et la deuxième surface de piste (3a), dans lequel
l'élément roulant (5) est constitué en acier inoxydable,
l'état de surface Ra de l'élément roulant (5) est inférieur ou égal à 0,01 µm,
**caractérisé en ce que**
la première surface de piste (1a) et la deuxième surface de piste (3a) ont chacune un état de surface Ra inférieur ou égal à 0,03 µm, et
l'élément roulant (5), la première surface de piste (1a) et la deuxième surface de piste (3a) ont des compositions de surface mutuellement différentes.

2. Roulement (10) selon la revendication 1, dans lequel
la valeur absolue de la différence entre la dureté de la première surface de piste (1a) et de la deuxième surface de piste (3a) et la dureté de la surface de l'élément roulant (5) est inférieure ou égale à 4 HRC.

3. Roulement (10) selon la revendication 2, dans lequel
la dureté de la première surface de piste (1a) et de la deuxième surface de piste (3a) est supérieure ou égale à 58 HRC et inférieure ou égale à 64 HRC, et
la dureté de la surface de l'élément roulant (5) est supérieure ou égale à 56 HRC et inférieure ou égale à 63 HRC.

4. Roulement (10) selon la revendication 3, dans lequel
un lubrifiant est alimenté entre la première surface de piste (1a) et la deuxième surface de piste (3a) et l'élément roulant (5), et
la viscosité cinématique du lubrifiant à 40 °C est inférieure ou égale à 50 mm²/s.
